Europäisches Patentamt

(19) European Patent Office

Office européen des brevets

(11) EP 0 871 322 A1

(12) **EUROPEAN PATENT APPLICATION**

(43) Date of publication:
14.10.1998 Bulletin 1998/42

(51) Int. Cl.$^6$: **H04N 1/40**

(21) Application number: 97106033.0

(22) Date of filing: 12.04.1997

(84) Designated Contracting States:
AT BE CH DE DK ES FI FR GB GR IE IT LI LU MC NL PT SE
Designated Extension States:
AL LT LV RO SI

(71) Applicant: **Agfa-Gevaert AG**
**51373 Leverkusen (DE)**

(72) Inventor: **Zehetmaier, Thomas**
**85646 Neufarn (DE)**

(54) **Double resolution image recording system**

(57) A system is described for recording electronic images on a recording medium, which may be a photosensitive medium. The system is arranged for recording images having a low spatial resolution or a small pixel matrix and a high spatial resolution or a large pixel matrix. For images with high resolution, a one-to-one relation is established between pixels of the electronic image and microdots to be recorded on the recording medium. Images with low resolution are recorded by pixel and line replication. For example, if the low resolution equals to half the high resolution, each pixel is assigned to two consecutive microdots and each line of

pixels is repeated twice. To achieve line repetition, a repeat-line FIFO is used to hold image information corresponding to exactly one line of pixels. Recording of the second line is achieved by retrieving the data from the repeat-line FIFO. In one method, the repeat-line FIFO is filled simultaneously with the recording of the first line. This method can be used for any integer sub-multiple of the high resolution, by choice of a FIFO that may be read out repeatedly. The method may also be used for any resolution lower than the high resolution, even for non-integer ratios.

Fig. 3

Printed by Xerox (UK) Business Services
2.16.3/3.4

## Description

### FIELD OF THE INVENTION

The present invention relates to devices and methods for rendering digital electronic images on a recording medium. More specifically the invention is related to electronic images having a different spatial resolution, to be rendered by a rendering system having one spatial rendering resolution.

### BACKGROUND OF THE INVENTION

Digital electronic images may be rendered on a recording medium by various apparatuses and techniques. One recording system is a photographic laser recorder, such as the Matrix Compact L (trade mark of Agfa-Gevaert N.V. in Mortsel, Belgium) or the LR3000 (trade mark of the same company).

Another recording system is an electrographic printing systems, such as the P400PS (trade mark of the same company), or the Chromapress system (trade mark of the same company).

Still another recording system is based on thermographic dye sublimation, such as the Drystar (trade mark of the same company).

Most of the above named systems have the capability to record continuous tone images. This means that each microdot, the smallest portion of the recording medium addressable by the rendering system, may have associated multiple grey levels, with no perceptible quantisation to them. When coloured dyes are used, "grey" should be interpreted as "luminance". The different grey levels are achieved by a spatially varying optical density, that may be attributed to each microdot individually by the rendering system. The number of gray levels is usually 256 or higher. Some systems, like Chromapress$^\lozenge$, preferably associate only 16 different grey levels to each microdot, and are therefore referred to as multilevel systems. The P3400PS$^\lozenge$ is a binary system, i.e. it can associate to each microdot only two different optical densities, corresponding to black and white.

A system requirement for the above mentioned recording systems, and in a specific (medical) environment for a continuous tone laser recorder, may be that the system is capable to operate at different spatial resolutions. The spatial resolution is defined as the number of pixels per linear unit, e.g. millimetre or inch, for digital images and the number of microdots per linear unit for a rendering system. The spatial resolution may be different in two orthogonal directions, designated as X and Y directions, but is usually substantially identical. Moreover, it may be required that the laser recorder can easily switch between these different spatial resolutions. It is also a requirement for such a laser recorder that, when operating at any one of the various possible spatial resolutions, the homogeneity of the recorded images is maintained at an optimum level.

In US-A-5 343 225 a system is disclosed for reading out image information from a frame memory in a line-by-line basis and writing out each line of information twice or m times on a recording medium, such that the speed of writing is m times as large as the speed of reading. According to that patent, two memory buffers having a capacity of one line are required. While one buffer is filled with data from the frame memory, the data of the other buffer are sent to the recording system. Such a system has the disadvantage that two memory line-buffers are required, each of which needs timing logic and possibly also addressing logic. Apart from these problems, that patent does not disclose how to solve the problem of keeping the resolution in both the X and Y dimensions substantially equivalent, nor how the image may be recorded homogenously.

### OBJECTS OF THE INVENTION

It is therefore a first object of the invention to provide a system and a method to adapt the resolution of the image to be recorded on the recording medium.

It is a further object of the invention to provide a system and a method for recording a homogenous image on the recording medium.

Further objects of the invention will become apparent from the description hereinafter.

### SUMMARY OF THE INVENTION

The above mentioned objects are realised by a system including the specific features according to claim 1. Specific features for preferred embodiments of the invention are set out in the dependent claims.

Further advantages and embodiments of the present invention will become apparent from the following description and drawings.

### BRIEF DESCRIPTION OF THE DRAWINGS

The invention is described hereinafter by way of examples with reference to the accompanying figure wherein:

Fig. 1    sows a block diagram for a specific rendering device according to the current invention.

Fig. 2    shows a typical printer-engine for a continuous tone laser printer

Fig. 3    shows a detailed block diagram of an embodiment for carrying out the invention

Fig. 4    shows a pixel structure for a conventional low resolution system

Fig. 5    shows a pixel structure for a conventional high resolution system

Fig. 6    shows a pixel structure for a high resolution recording system, recording a low resolution image

Fig. 7     shows an alternative embodiment for providing switches

## DETAILED DESCRIPTION OF THE INVENTION

While the present invention will hereinafter be described in connection with preferred embodiments thereof, it will be understood that it is not intended to limit the invention to those embodiments. On the contrary, it is intended to cover all alternatives, modifications, and equivalents as may be included within the spirit and scope of the invention as defined by the appending claims. The invention will be disclosed in relation with a continuous tone photographic laser recorder. It is however clear that other recording devices may be envisaged, such as thermal dye systems, electrophotographic or electrographic systems, ink jet printers, etc.

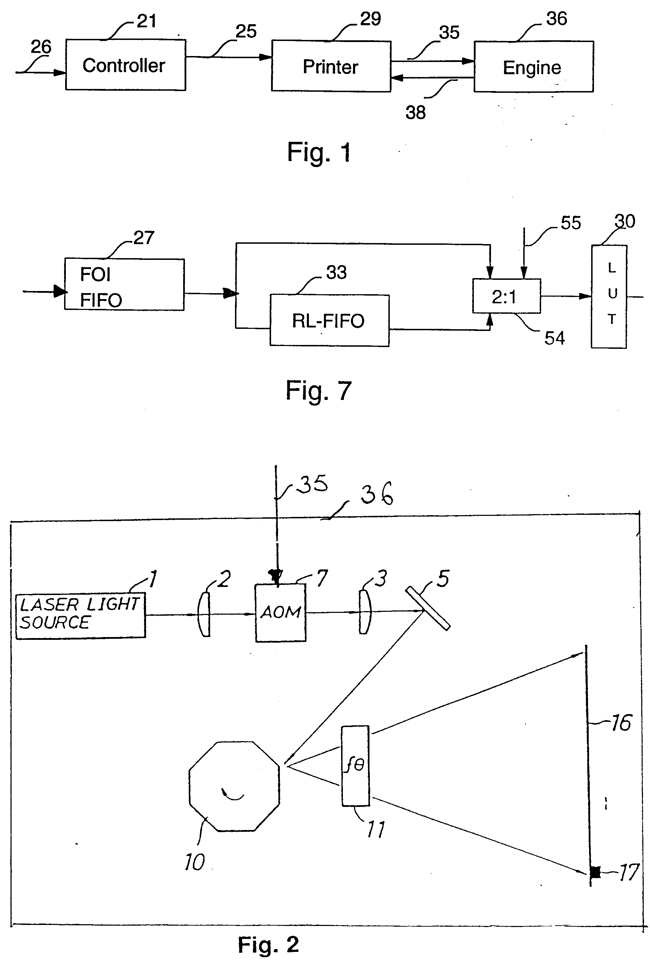

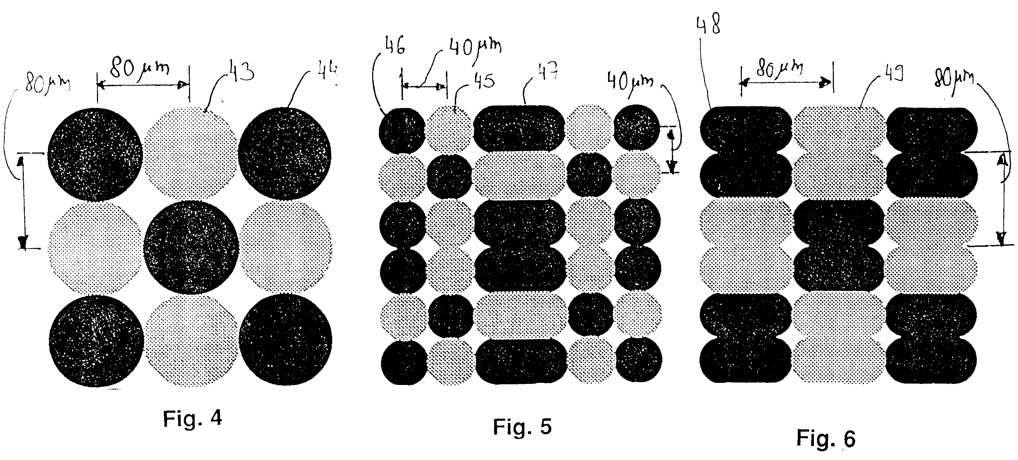

Referring to Fig. 1, there is described a preferred embodiment for the current invention. A source of image information (not shown) provides image information via a connection 26 to a controller 21. This controller formats the image data in order to be suited for sending the formatted data to the printer 29 via a connection 25. The printer 29 receives the formatted data and generates the required timing signals, in order to drive in real time the engine 36 via the connection 35. The engine sends back control and timing signals via connection 38, as will be discussed below. The engine irradiates the photosensitive member by light modulated according to the image signals received by connection 35 and thereby generates a latent image on the photosensitive member. The latent image is thereafter developed and fixed in order to result in a hardcopy, on which the image-wise variation of optical densities provides an image that may be visually perceived. The print engine 36 can print-images in 630 dpi mode. The shorthand "dpi" stands for "(micro)dots per inch", where 1 inch is 25.4 mm. This mode is referred to as high resolution mode. The print engine can also mimic operation in 315 dpi mode, referred to as standard resolution. In order to demonstrate the effect of the spatial resolution, a comparison may be made between Fig. 4 and Fig. 5. Fig. 4 shows an enlarged view of the pixel structure for a conventional 315 dpi system. The distance between the centres of two pixels or microdots is there 25.4 mm/315 = 80 mm, in each direction. Each circular field 43, 44 represents one image pixel of the digital image information, which corresponds in a one-to-one relation to one microdot of the printer system. As is shown in Fig. 4, each microdot may have its own uniform optical density. For example microdot 43 has a low optical density, whereas microdot 44 has a high optical density. Fig. 5 shows an enlarged view of an image portion printed on a high resolution printer. The spatial resolution of the digital image information is the same as the spatial resolution of the printer engine, i.e. 630 dpi. As such, each pixel of the digital image information corresponds in a one-tone relation to a microdot as produced by the printer engine 36. The distance between the centres of two adjacent microdots is therefore 40 mm, both in the horizontal direction on Fig. 5 as in the vertical direction. The horizontal direction represents the fast-scan direction, the vertical direction represents the slow-scan direction. These two directions will be discussed in more detail below. The circular area 45 represents a microdot at high resolution (630 dpi), having a low optical density, whereas region 46 represents a microdot having a high optical density. The elongate region 47 represents two horizontally adjacent microdots at the same high resolution of 630 dpi, each having the same high optical density. The middle of Fig. 5 shows a region of four adjacent microdots, arranged in a square region, that have the same high optical density. These four microdots are represented by two vertically adjacent horizontally elongate regions. The pixel shape representation in the Figs. 4, 5 and 6 is idealized, since in reality the pixels have a Gaussian density profile, attributable to the Gaussian luminous intensity profile of the laser beam impinging on the photosensitive medium.

The engine 36, according to a preferred embodiment, is now discussed in more detail in conjunction with Fig. 2. The elements and their operation in a preferred print engine 36 may be summarised as follows. The engine 36 comprises a light source 1, which is preferentially a laser. The light beam emanating from the light source can be modulated by an acousto-optical modulator 7 (AOM). In an alternative embodiment, the luminous flux of the light source itself may be modulated, e.g. by varying the amplitude of the electrical current applied to the light source 1. Such a recording system is disclosed in the German patent applications DE 1 95 07 877 and DE 1 96 07 880, where the light source is a laser diode, modulated by the amplitude of the current applied to the laser diode. In that embodiment, the AOM 7 may be dispensed with. A beam deflection system is arranged in the light path. This may be realised by a polygon mirror 10. As the beam is deflected and swept over the width of the photosensitive medium, one scan-line is generated. The direction according to this motion is referred to as fast-scan direction. A transport system (not shown) moves the photosensitive member 16 in a direction substantially perpendicular to the fast-scan direction. This transport system may be realised by a motor-driven drum. The optical path for the light beam has also means (2, 3) to form and shape the spot, i.e. to achieve a specific illumination of the photosensitive medium 16. That illumination may be highly place dependent, and usually has a Gaussian profile. The generation and path of a light beam is now described in more detail. A beam emitted from a laser light source 1 is shaped by a beam expander 2 to have a predetermined beam spot, and is incident on an acousto-optical modulator 7, referred to as AOM. The AOM 7 modulates the intensity of the incident light in accordance with a preferentially analog electric data signal supplied thereto via connection 35 between the printer 29 and the engine 36. The beam modulated by the AOM 7 may be converted into a parallel beam by another beam expander 3. The size of the beam emitted by the laser light source 1 may thus be enlarged by the two expanders 2 and 3. The beam output from the beam expander 3 is reflected by a mirror 5, and is incident on a rotational polygon mirror 10 to perform horizontal scanning, in the main or fast scanning direction. The beam is reflected from the polygon mirror 10 to on an fq lens 11. The fq lens 11 has a function to allow the beam to form an image at a position proportional to its incident angle. As a result, constant-speed scanning proportional to the rotating angle of the rotational polygon mirror 10 can be performed. A recording medium, e.g. a photosensitive film or a photosensitive drum, is placed on an image-forming plane 16. In a preferred embodiment, the beam is always focused for the high resolution mode, i.e. 630 dpi according to the current embodiment. The recording medium on the image-forming plane 16 is moved in a direction perpendicular to the plane of the sheet of Fig. 2, thereby performing sub-scanning. The shift speed, also referred to as sub-scanning speed, of a recording medium is conventionally set to a value for moving it for a distance corresponding to the pixel size in the sub-scanning direction during one main scanning. The pixel size in the sub-scanning direction here means (recording length in the sub-scanning direction)/(number of pixels in the sub-scanning direction). A sub-scanning speed v (mm/sec) is conventionally set as :

$$v=(P/60).n.A, \text{ where}$$

P (rpm or rotations per minute) is the rotational frequency of the rotational polygon mirror 10,
n is the number of the reflecting surfaces, and
A (mm) is the pixel size in the sub-scanning direction.

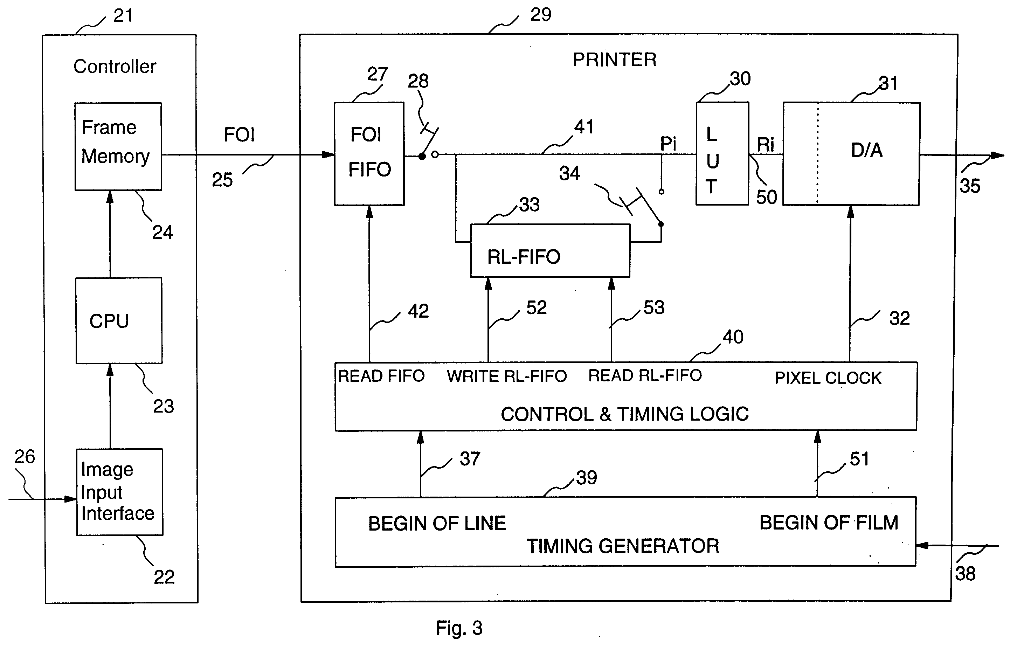

In order to correctly synchronise the delivery of image information via connection 35 and the position of the rotating polygon 10, an optical detector 17 is arranged at the outermost position of the main scanning width of the image-forming plane. A horizontal sync signal 37 (Fig. 3), also referred to as begin of line signal, for controlling the data recording start position is detected by the optical detector 17. This signal 37 is preferably generated by a sensor mounted in the print engine 36, to detect precisely the start of each scan line. The detected signal is then amplified and waveform-shaped by a sync signal detector (not shown) and is then input to a timing generator 39 via a second connection 38 between the engine 36 and the printer 29. The timing generator 39 generates via a control and timing logic circuit 40 a pixel clock signal 32 for a horizontal direction, i.e., main scanning direction, in synchronism with the input sync signal 37. The pixel clock 32 is a continuous clock signal, generated by the control and timing logic 40, and is synchronised with the displacement of the scanning spot. Within every pixel clock period, one microdot is irradiated on the photosensitive media. The pixel clock 32 is a basic signal for generating other timing signals. Thus, the control and timing logic 40 uses the begin of line signal 37 to synchronize the pixel clock 32. The pixel clock is supplied to a digital to analog convertor 31, comprising a sample/hold circuit in order to read and latch the data from Look Up Table 30. An analog signal output from the D/A converter 31 is supplied to the AOM 7 through the connection 35. The AOM 7 modulates the beam as described earlier.

The print engine 36 also generates a begin of film signal 51. This signal is preferably generated by a sensor (not shown) mounted in the print engine 36. This sensor detects the edge of a sheet of film, or more generally a specific start location of the photosensitive media. The begin of film signal 51 is processed in the control and timing logic 40, in order to start an exposure cycle.

The controller 21 and the printer 29 in a preferred embodiment according to the current invention, will now br described in more detail referring to Fig. 3.

Electronic images may be provided to a controller 21 via a connection 26 between a source of image information (not shown) and the controller 21. The source of image information may be a medical scanner for computed tomography (CT) or a magnetic resonance (MR) device. Electronic images may also be provided from ultra-sound (US) medical devices, that are capable to reconstruct an image obtained by reflection of ultra sound signals.

Electronic images thus obtained are usually stored in a frame store in the medical image acquisition device. This frame store is repeatedly read out, in order to generate analog video signals for a black and white or colour video monitor, on which the physician may visually evaluate the image. The analog video signals may also be provided to the controller 21 via connection 26. In a preferred embodiment, these analog video signals are transmitted to a suitable image input interface 22. In order to acquire such analog video images and convert them in a digital image representation, a Video Synapse Interface (VSI, trade name of Agfa-Gevaert N.V. in Mortsel Belgium) may be used. This system is capable to digitize analog video images, having a pixel clock up to 120 MHz, with a precision or tonal resolution of 256 levels per colour component. In an alternative embodiment, the image source may provide a copy of the image stored in its frame store via a digital link 26, such as an ethernet connection, using a thick or thin ethernet cable, or using the 10base-T technology etc. As the image input interface 22 receives either an analog video image or a digital image, it converts the image into a suitable digital format. The Central Processing Unit 23, referred to as CPU, controls the image input interface and gets the digital image data from the image input interface 22. Under the control of the CPU 23, the controller 21 formats a "page", to be printed on the output medium 16, and stores the image information relating to this page in the frame memory 24. In the frame memory, the image information related to the page is arranged in a rectangular two-dimensional matrix of picture elements or pixels. In a preferred embodiment, the frame memory has the notion of a "horizontal" dimension, which corresponds to the fast-scan dimension in the printer engine 36. In that case, the "vertical" dimension corresponds to the slow-scan dimension in the printer engine. As such, the image information is arranged in horizontal lines and vertical columns. At the intersection of a line and a column, a pixel is located. Each pixel has a value. Such value may range over different levels, the number of levels is either determined by the image source (CT, MR, US), or by the capabilities of the printer system 29, 36 or both. Most image sources are capable to provide 8-bit images. This means, that each pixel value may have 256 different levels, ranging e.g. from 0 to 255. The level 0 may represent black, whereas 255 represents white. Image sources are also available that provide 16 bits for each pixel, thus allowing 65536 different levels for each pixel value. For colour images, each pixel has preferably three values, referred to as colour values, preferably a value for red, one for green and one for blue. Each colour value may be stored in 8 or 16 bits. Also other density resolutions, e.g. 6 bits, 10 bits, 12 bits etc. for the incoming image information are possible. Before storing the image information in the frame memory 24, the CPU 23 may convert each pixel value from an n-bit number to an m-bit number, where n may be 8, 16, .., and m may be 8, 12, 16, ... This conversion may be done by an input look up table. On the other hand, the printer engine may have a D/A-convertor 31 that accepts 8, 10, 12 or 16 bits, i.e. that may generate 256, 1024, 4096 or 65536 different analog output voltage levels. In function of the tonal resolution (e.g. 8 or 16 bits per pixel) of the image provided to the controller 21 and of the tonal resolution of the printer 29 and engine 36, the tonal resolution of the page stored in frame memory 24 may be fixed. In a preferred embodiment, the tonal resolution of the image information stored in frame memory 24 is either 8 or 12 bits per pixel, i.e. m=8 or 12.

On the other hand, with the pixels of the image information may also be associated a spatial resolution. This is expressed as number of pixels per millimetre or number of pixels per inch, referred to as dots per inch (dpi). As the image is transmitted to the controller 21, it has a specific spatial resolution, which may be calculated by dividing the horizontal width of the real object represented by the image, divided by the number of columns in the image. As the image is stored in the frame memory 21, its spatial resolution is preferentially brought into conformity with the spatial resolution of the printing system. If the printing system has a spatial resolution of 315 dpi, then the spatial resolution of the page in frame memory is preferentially also 315 dpi or an integer sub-multiple of that resolution. If the image width on the recording medium is 14" (14 inch = 355.6 mm), then the maximum number of columns that may be printed on the recording medium is 315*14=4410. In that case, the number of columns of the two-dimensional array representing the page in frame memory 24 must not exceed 4410 pixels. If the spatial resolution of the image information stored in the frame memory is identical to the spatial resolution of the printing system 29, 36, then there will be a one-to-one relation between each pixel in frame memory 24 and each microdot on the output medium. If the spatial resolution of the image in the frame memory 24 is half the resolution of the printer, then each pixel must be printed twice horizontally and vertically in order to achieve a printed image at the correct scale, i.e. having the required horizontal and vertical dimensions.

In most cases, several images related to the same subject must be represented on one hard copy, made by the printer. Therefore, these images are arranged in the image information for the page stored in the frame memory 24. In a preferred embodiment, the complete representation of a full page is stored in frame memory 24, before the image-information is sent to the printer 29. The reason is that the printer works in real-time, and is preferably not stopped to wait for other image information that must be provided via the image input interface 22. Once a complete page is assembled in frame memory 24, the complete page is transmitted to the printer 29 for exposure on a photosensitive medium, preferably a photographic film. The printer 29 takes care of the necessary timing and logic and sends analog image signals via connection 35 to the printer engine 36 in order to expose the photosensitive medium based on digital image data sent by the controller 21.

For the transmission from the controller 21 to the printer 29, in a preferred embodiment a fibre optic (FOI) transmission 25 is used. This has the important advantage that the printer 29 is galvanically de-coupled from the controller 21, which may then be placed in a medical environment. Another advantage is that the speed of transmission via an optical interface is suitable to feed the printer with image data. By making use of taxi-chips for converting parallel data to serial data with checksum and providing also the inverse decoding, images may be transmitted at a rate of 125 megabit per second. Moreover, since this transmission bandwidth is large enough for image data, also control commands may be mixed in these image data commands. Such control commands may be arranged in control data packets, which may be multiplexed between image data packets. Control commands may be required in order to communicate from the controller 21 to the printer 29 the size of the image, i.e. the number of rows and columns, the tonal resolution, e.g. 8, 12 or 16 bits, and the spatial resolution. The printer 29 may also communicate information to the controller 21 via this optical link, e.g. with respect to the completion of the exposure of the photosensitive medium and its readiness to accept image information for a new page to be printed.

In the printer 29, the image information is preferentially received by a FIFO memory means 27, referred to as FOI FIFO, since the FIFO may be integrated on the Fibre Optic Interface (FOI), for converting the optical signals on connection 25 to electronic signals. A FIFO (First-In-First-Out memory) may be seen as a special form of a shift register. A specific common feature for all FIFO's is that data signals appear in the same sequence on the output of the FIFO as they were input to the FIFO. The data element first read, will be first shifted out also. A FIFO needs a "read FIFO signal" 42 and a "write FIFO signal" (not shown, provided by the FOI interface). The read and write signals may occur completely asynchronous. Therefore, the FOI FIFO 27 is well suited to couple the two asynchronous systems, i.e. the controller 21 and the printer 29, or the FOI transmitter (not shown) in controller 21 and the FOI receiver (not shown) in printer 29. More specifically, FOI FIFO 27 decouples the FOI 25 transmission speed from the writing speed of the engine 36. It also allows the controller 21 to send image data in packets, while the printer 29 reads image data continuously in real time. Since the frame memory 24 is preferably realised by Random Access Memory, and since access of this memory under direct control of the CPU 23 may be too slow, it is preferred that the data stored in the frame memory 24 is transmitted to the FOI connection 25 by use of Direct Memory Access (DMA). In this way, the FOI transmitter interface (not shown) in controller 21 gets full control over a portion of the frame memory 24, where the image information to be transmitted is stored. The FOI transmitter generates itself the correct addressing and read signals to get the data from the frame memory. In a more preferred embodiment, the data transmission between the frame memory 24 and the FOI transmitter is done in block transfer mode. This means that for a contiguous block of data in memory, occupying several consecutive memory locations, only one memory address must be provided, along with the number of elements to be transmitted from frame memory 24 to the FOI transmitter. When using a computer bus, such as the VME-bus or the EISA-bus, also bus throttling may be envisaged in order to reduce the average access time of the frame memory 24 to a minimum.

In order to avoid the fall through time of FIFO's of the first generation, preferably a FIFO of the second generation is used. In such FIFO the data are not shifted, but each data element is stored at a fixed location in the RAM (random access memory) of the FIFO, whereas two pointers give an input-address and an output-address in RAM respectively. During operation, both address pointers are modified in a cyclic manner, as data are written to or read from the FIFO respectively. From the value of both pointers it can be derived whether the FIFO is full, empty, half-full etc. An important advantage of a FIFO over RAM is that the FIFO incorporates all the necessary addressing logic and read/write arbiter logic, which is rather complex for single or dual ported RAM.

The image information to be sent next to the engine 36 for printing is thus available in the FOI FIFO 27. Each time when the next data element is read from FOI FIFO 27, it may be sent via the direct connection 41 form the FIFO 27 to the look-up-table 30, since that data element is in the correct sequence for printing. The size of the FOI FIFO 27 is selected preferably such that it may hold more data than required for one image line. Typically three lines of low-resolution data may be stored in a full FOI FIFO 27.

In high-resolution operation, the pixels stored consecutively in the FOI FIFO 27 are read from the FIFO 27 under control of the read FIFO signal 42. The switch 28 is closed in this mode of operation, and the switch 34 is opened. As such, the data read from FIFO 27 are sent to the look up table (LUT) 30. This LUT 30 is used for linearization and compensation of the print engine 36 in cooperation with the photosensitive member, e.g. film. For each pixel value $P_i$, a specific optical density $D_i$ on the recording medium may be required. The relation between the pixel value $P_i$ and the required optical density $D_i$ is highly dependent on the type of images (CT, MR, US) to be visually evaluated and on the subjective requirements of the physician. By system calibration, it may be determined which raw digital output data value $R_i$ 50 is required to achieve the required density $D_i$. The relation between $R_i$ and $D_i$ is highly dependent on the type and sensitivity of the photosensitive medium irradiated by the light source and also on other system parameters such as luminous intensity, dwell time, exposure, etc. In order to get the correct image densities $D_i$ on the recording medium, the LUT 30 transforms each pixel value $P_i$ to the appropriate raw digital output data value $R_i$. If the tonal resolution of the image information in the frame memory 24 is 8 or 12 bits, whereas the digital to analog convertor 31 requires a 16 bit input, the LUT 30 transforms 8 or 12 bit pixel values to 16 bit raw output data 50.

The digital to analog-convertor (DAC) 31 is coupled to the output of LUT 30. The DAC has an input register, which is capable to hold the raw digital output data value $R_i$ 50. A clock pulse 32, referred to as pixel clock signal, loads the next raw value $R_i$ provided by the LUT 30 in the register of DAC 31. The pixel clock signals 32 are generated in a unit referred to as control and timing logic 40. This logic 40 keeps track of the position of the laser beam, in order to synchronise the presentation of signals 35 to the engine 36 with the correct position for these signals on the recording medium.

As set out before, the DAC generates an analog output signal 35, the voltage of which is substantially proportional to the raw value $R_i$ stored in the register of the DAC 31. In Fig. 2 is shown how this analog voltage signal 35 is used to drive the AOM 7, which attenuates the luminous intensity from the light source 1. Alternatively, where the light source is a laser diode, the voltage signal 35 may be used to modulate the luminous intensity of the laser diode.

Still referring to Fig. 3, it will now be explained how the high resolution images are printed and then how the standard resolution images are printed for which other elements of Fig. 3 are further identified.

Printing of high resolution images

In this case, the spatial resolution of the digital image data in frame memory 24 corresponds to the spatial resolution of the printing system 29, 36. This means that each pixel in the digital image represents a region having as dimensions about 40 mm by 40 mm in a 630 dpi recording system. Also the printer engine 36 is capable to address individually each location having dimensions of 40 mm by 40 mm, i.e. the distance between the centres of two adjacent microdots is about 40 mm. Therefore, the printer may locate at each such region a microdot having a specific optical density, determined by the pixel value of the corresponding pixel of the digital image. Since the spatial resolution of the digital image is the same as the spatial resolution of the printer engine 36, the pixels of the digital image correspond in a one-to-one relation to the microdots formed by the printer engine 36.

In order to print the images at the highest resolution, i.e. 630 dpi according to the specific embodiment, the image information data stored in the FIFO for image information 27 are used directly for printing. The repeat-line FIFO 33 is preferably not used. In order to by-pass the repeat-line FIFO 33, the first switch 28 is closed, and the second switch 34 is open, to print high resolution images. As discussed herein before, Fig. 5 represents image data printed at high spatial resolution.

Printing of standard resolution images

In order to print the images at the standard resolution, i.e. 315 dpi according to the specific embodiment, the laser is still focused for the high resolution mode of 630 dpi, as described before, and the lower resolution is obtained by double-printing every pixel in the fast-scan direction, and double-scanning of every line in the slow-scan direction. Thus, for halving the high spatial resolution of the printing system 29, 36, each image line is printed twice. This is achieved by printing a first line and then printing a - preferentially identical - second line. While printing the first line, the image data is preferably sent from the FIFO for image information 27 via the direct connection 41 to the Look Up Table (LUT) 30, under the control of the "read FIFO" signal 42. To realise the direct connection, the first switch 28 is closed. In order to send data from the FOI FIFO 27 only to the LUT 30, the second switch 34 is opened. The image data are subsequently transformed by LUT 30 and sent to the D/A convertor 31. Under control of the pixel clock signal 32, the transformed image data are converted to an analog signal, sent via connection 35 to the AOM 7 (Fig. 2). In standard resolution mode, the frequency of the pixel clock signal 32 may be half that frequency for high resolution images. Each raw digital output data value $R_i$ is held twice as long in the input register of the DAC 31, as compared to the high resolution printing. Simultaneously to providing the image data via direct connection 41 to LUT 30, and thus simultaneously to exposing the first line of image data to the photosensitive member 16, the same image data are sent to the repeat-line FIFO 33. The data from FOI FIFO 27 are clocked into the repeat-line FIFO 33 under control of the "write RL-FIFO" signal 52. It is thus clear that during printing of the first line of image data, the repeat-line FIFO 33 is filled with the same data: FIFO 33 inputs one line of standard resolution image data from FOI FIFO 27, while the first line is printed. The first switch 28 is closed, the second switch 34 is open during the transmission of the first line. As the first line is completely printed, the repeat-line FIFO 33 contains one line of image data. As such, the repeat-line FIFO 33 allows to repeat a line, which is necessary since standard resolution input data requires to print every line twice. The image data in repeat-line FIFO 33 is now ready to be printed for the second line. The second line or repetition line is now printed from the data in the repeat-line FIFO 33. To achieve this operation, the first switch 28 is opened and the second switch 34 is now closed. Under control of a "read repeat-line FIFO" signal 53 generated by the control and timing logic 40, the data stored in repeat-line FIFO 33 are made available to the input of the look up table 30, transformed to raw digital image data $R_i$, which are fed to the DAC 31 in order to modulate the luminous intensity of the light beam in the engine 36, to record the second line. The read repeat-line FIFO signal 53 and the pixel clock signal 32 have substantially the same frequency. In this mode of operation, it is also required that no data is read from the FOI FIFO 27, while the second line is printed.

The pixel structure on the recording medium obtained by this method is shown schematically in Fig. 6. Although the printer engine 36 is capable to address each individual microdot having a size of 40 mm by 40 mm, the size of each pixel is 80 mm by 80 mm, as indicated on Fig. 6. Region 48 is represented by two vertically adjacent horizontally elongate areas. This region corresponds to one pixel in the digital image and may be thought as composed of four adjacent microdots, arranged in a square region 48. The optical density of region 48 is high. Region 49 has the same shape and composition as region 48, but has a low optical density. It is clear from Fig. 6 that the optical density is always aimed at one value in each region of 80 mm by 80 mm. It is also clear that for each region of 80 mm by 80 mm only one digital pixel value is required to drive the printer 29. It is up to the printer 29 to drive the engine 36 correctly in order to achieve the result as shown in Fig. 6.

With the embodiment described herein above, it is thus possible to print image information having a high resolution on a high resolution printer, and to print image information having a lower resolution, on the same high resolution printer, preferably by focusing the light beam for the high resolution mode. The arrangement of the microdots and especially the pixel value assigned to them, contributes to homogenous recording of the image. Exposing the photosensitive medium with the same light beam focusing as well for low resolution images as for high resolution images, is referred to as fine scanning. The capability to record high and low resolution digital images by the same recording system is referred to as dual resolution recording. Fine scanning used in dual resolution recording has several advantages : a higher optical density of the recorded images may be achieved and individual lines are less perceptible and less conspicuous on the recording material.

Several variations are possible. Instead of modulating the luminous intensity of the light beam, the luminous flux of the light source may be varied by controlling the electrical power, voltage or intensity applied to the light source, e.g. a laser diode.

The frame memory may be arranged directly in the printer 29, instead of in a separate controller 21. If the frame memory can be addressed in real time, then it can be directly coupled to the input of the first switch 28. In that case, the read FIFO signal 42, may be used to access the data in real time from the frame memory. The system may then be further operated in the manner as described before.

In another alternative embodiment, the data for one image line may always be fed directly to the repeat-line FIFO 33. According to that option, switches 28 and 34 may always be closed, or even dispensed with for that reason. Direct connection 41 may then also be omitted. The repeat-line FIFO 33 may be filled under control of the write repeat-line fifo signal 52. As soon as the FIFO 33 is filled, or as soon as the FIFO 33 has enough data to keep up with the real-time requirements of the engine 36, the "read repeat-line FIFO" signal 53 may be activated to send the data to LUT 30. As soon as the first data line is recorded on the recording medium, the FIFO 33 may be set to retransmit the same line. As discussed before, the second generation FIFO comprises RAM, which stores the data at fixed locations. These data are not lost when they are read out. Rather, a read-FIFO pointer is accessing consecutive FIFO-locations, until the last element is reached. Some FIFO's now have the option to reset the read-FIFO pointer to the first location, in order to read the FIFO again. It may then be a requirement however that no more data than one line are stored in the repeat-line FIFO 33 and that the FIFO is reset after the last identical line is read from the FIFO 33. By making use of this option, the same line may be repeated as much times as may be required by the spatial resolution of the image information in the frame store 24 with respect to the spatial resolution of the engine 36.

An alternative arrangement for the switches 28 and 34 is given in Fig. 7. Fig. 7 shows the FOI FIFO 27, which is directly connected to a 2:1-selection unit 54. The output of FOI FIFO 27 is also directly connected with the input of repeat-line FIFO 33. The output of repeat-line FIFO 33 is connected to the second input of the 2:1-selection unit 54. A selection signal 55 drives the selection switch 54, based on the requirement to read data either from FOI FIFO 27 directly for the first line or from repeat-line FIFO 33 for the second or subsequent lines. The output of the 2:1-selection switch is connected to LUT 30. The scheme is further as depicted in Fig. 3.

The above description discloses how the high resolution recording system is capable to record high resolution (e.g. 630 dpi) digital images, low resolution (e.g. 315 dpi) digital images having a spatial resolution that is half the spatial resolution of the high resolution, or even lower resolution digital images having a spatial resolution (e.g. 210 dpi) that is an integer submultiple (e.g. 1/3) of the high resolution. In that case, each line must be printed three times, which may be realised with one repeat-line FIFO 33 if the re-transmit option is available. This may also be realised by a second repeat-line FIFO (not shown) in parallel with the first repeat-line FIFO (33) and appropriate switches as shown in Fig. 3 or an appropriate selection unit 3:1, comparable to the selection unit 54 shown in Fig. 7. In all the above cases, the frequency of the pixel clock 32 for the D/A-convertor 31 is preferably multiplied with the same fraction too. This may be realised by a frequency divider, which is well known in the art.

It is also possible to record digital images having a spatial resolution that is a non-integer submultiple of the spatial resolution of the engine 36, without modifying :

- the shape or size of the spot or light beam shown in Fig. 2
- the rotation speed of the polygon mirror 10
- the driving speed in the slow-scan direction

In the fast-scan direction this may be realised by changing the frequency of the pixel clock 32, read FIFO 42 and read repeat-line FIFO 53 signals accordingly. The frequency of the pixel dock 32 for a low resolution digital image $F_L$ is given by the following equation:

$$F_L = a.\ F_H \text{ with } a = R_L/R_H$$

In the above equations:

$F_H$ = frequency of the pixel clock 32 for a high resolution digital image

$R_H$ = spatial resolution of the high resolution digital image

$R_L$ = spatial resolution of the low resolution digital image

The frequency $F_L$ thus computed may be achieved in the pixel clock 32 by a phase-lock loop (PLL) circuit as disclosed in EP-A-0 690 611, based on the "base clock" generated by the begin of line signal 37.

The repetition of single lines by the repeat-line FIFO 33 may be derived from the factor a according to the following piece of pseudo-code using floating point arithmetic for S and a:

S = 0

1  if (image completely printed) STOP

get line from FOI FIFO 27

S = S + 1

2  output line to LUT 30

S = S - a

if ( S £ 0 ) go to 1

go to 2

If the lines in FOI FIFO 27 are consecutively numbered 1, 2, 3, ..., then for a=1 the following lines are sent to LUT 30 : 1, 2, 3, ... For this and other values of a, the sequences are given in the table below :

| α | Sequence of lines sent to LUT 30 |
|-----|---------------------------------------|
| 1/1 | 1 2 3 4 5 6 7 8 9 10 11 12 13 14 15 16 |
| 1/2 | 1 1 2 2 3 3 4 4 5 5 6 6 7 7 8 8 |
| 1/3 | 1 1 1 2 2 2 3 3 3 4 4 4 5 5 5 6 |
| 2/3 | 1 1 2 3 3 4 5 5 6 7 7 8 9 9 10 11 |
| 1/4 | 1 1 1 1 2 2 2 2 3 3 3 3 4 4 4 4 |
| 5/6 | 1 1 2 3 4 5 5 6 7 8 9 10 10 11 12 13 |
| 4/9 | 1 1 1 2 2 3 3 4 4 5 5 5 6 6 7 7 |

From the entry a=1/1 in the above table, it is clear that line 1 is sent once to LUT 30, line 2 is sent once, etc. Entry a=1/2 shows that line 1 is sent twice, line 2 is sent twice etc. Entry a=1/3 shows that line 1 is sent three times, line 2 is sent twice etc. Entry a=2/3 shows that lines 1, 3, 5, 7, 9, .. are sent twice, whereas lines 2, 4, 6, 8, 10, ... are sent once. Entry a=1/4 shows that each line is sent four times. Entry a=5/6 shows that lines 1, 5, 10, .. are sent twice, whereas lines 2, 3, 4, 6, 7, 8, 9, 11, 12 ... are sent only once. Entry a=4/9 shows that lines 1, 5, .. are sent three times, whereas lines 2, 3, 4, 6, ... are sent only twice. The above line repetitions may be realised by suitably opening and closing the switches 28 and 34, and by monitoring correctly in the control and timing logic 40 the read FIFO signal 42, the write repeat-line FIFO signal 52 and the read repeat-line FIFO signal 53. It is clear that this method works for any value of a£1. Artifacts in the slow-scan direction may occur if a is not an integer submultiple due to the unequal line repetitions, but this may be not very conspicuous in smooth images.

Having described in detail preferred embodiments of the current invention, it will now be apparent to those skilled in the art that numerous modifications can be made therein without departing from the scope of the invention as defined in the following claims.

Parts list

| | |
|-----|---|
| 1. | Laser light source |
| 2. | First beam expander |
| 3. | Second beam expander |
| 5. | Mirror |
| 7. | Acousto Optical Modulator |
| 10. | Polygon mirror |
| 11. | fq-lens |
| 16. | Image-forming plane |
| 21. | Controller |
| 22. | Image input interface |
| 23. | Central Processing Unit CPU |
| 24. | Frame memory |
| 25. | Connection between controller and printer |
| 26. | Connection between source of image information and controller |
| 27. | FIFO for image information |
| 28. | Image information switch |
| 29. | Printer |
| 30. | Look Up Table |
| 31. | Digital to analog convertor |
| 32. | Pixel Clock signal |
| 33. | Repeat-line FIFO |
| 34. | Repeat line switch |
| 35. | Connection between printer and engine for analog video data |
| 36. | Engine |
| 37. | Horizontal sync signal or begin of line signal |
| 38. | Second connection, between printer and engine |
| 39. | Timing generator |
| 40. | Control and timing logic circuit |
| 41. | Direct connection from FOI FIFO to Look Up Table |
| 42. | Read FIFO signal |
| 43. | Microdot at low resolution having low optical density |
| 44. | Microdot at low resolution having high optical density |
| 45. | Microdot at high resolution having low optical density |
| 46. | Microdot at high resolution having high optical density |

47.  Two adjacent microdots at high resolution having same high optical density
48.  Pixel having high optical density at low resolution printed by four microdots at high resolution
49.  Pixel having low optical density at low resolution printed by four microdots at high resolution
50.  Raw digital output data value
51.  Begin of film signal
52.  Write repeat-line FIFO signal
53.  Read repeat-line FIFO signal
54.  2:1 select switch
55.  Select signal

**Claims**

1.  A rendering device for recording a digital electronic image on a recording medium (16) comprising:

    -   providing means (24, 25, 27) for providing image information corresponding to one line of said electronic image ;
    -   recording means (30, 31, 36) for :

        -   recording said image information during a first recording period on a first line on said recording medium (16) ; and,
        -   recording said image information during a second recording period on a second line, adjacent to said first line ;

    -   storage means (33) for :

        -   acquiring said image information from said providing means (24, 25, 27) ; and,
        -   storing said acquired image information ;

    -   retrieving means (33, 53) for :

        -   retrieving said image information from said storage means (33) ; and,
        -   supplying said image information to said recording means (30, 31, 36) for recording said second line.

2.  Rendering device according to claim 1, wherein said storage means (33) is a first in first out (FIFO) memory means.

3.  Rendering device according to any one of the preceding claims, wherein said storage means is arranged for acquiring said image information during said first recording period.

4.  Rendering device according to claim 3 including switching means (28, 34, 54) for selectively coupling said recording means (30, 31, 36) to :

    -   said providing means (24, 25, 27) during said first recording period ; and,
    -   said retrieving means (33, 53) during said second recording period.

5.  Rendering device according to any one of the preceding claims, including means for recording each line of said image information to an adjacent line on said recording medium.

6.  Rendering device according to any one of the preceding claims, wherein said recording means includes a pixel clock (32) having a variable frequency for recording individual pixels of said image information.

7.  Rendering device according to any one of the preceding claims, including means for plural retrieval of said image information from said storage means (33).

8.  Rendering device according to any one of the preceding claims, wherein said providing means is :

    -   a frame memory (24) ; or,
    -   a first in first out memory means (27)

    for storing a portion of said digital electronic image, said portion being substantially larger than said image information corresponding to one line.

9.  A method for recording a digital electronic image on a recording medium (16) comprising the steps of :

    -   providing image information corresponding to one line of said electronic image ;
    -   recording said provided image information during a first recording period on a first line on said recording medium ;
    -   acquiring said provided image information ;
    -   storing said acquired image information ;
    -   retrieving said stored image information ;
    -   supplying said retrieved image information for recording during a second recording period on a second line, adjacent to said first line.

10. Method according to claim 9, wherein said step of acquiring is performed before or during said first recording period.

**Fig. 1**

**Fig. 7**

**Fig. 2**

Fig. 3

Fig. 6

Fig. 5

Fig. 4

**European Patent Office**

## EUROPEAN SEARCH REPORT

Application Number

EP 97 10 6033

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 455 250 A (HONEYWELL INC) 6 November 1991 | 1,2,5-10 | H04N1/40 |
| Y | * abstract; claims 1,2; figures 1,3-5 *<br>* column 1, line 45 - line 58 *<br>* column 3, line 23 - line 50 *<br>* column 5, line 33 - column 7, line 33 *<br>* column 9, line 34 - column 10, line 37 * | 3,4 | |
| Y | PATENT ABSTRACTS OF JAPAN<br>vol. 006, no. 055 (E-101), 10 April 1982<br>& JP 56 169966 A (RICOH CO LTD), 26<br>December 1981, | 3,4 | |
| A | * abstract * | 10 | |
| A | US 4 367 533 A (WIENER PATRICIA P) 4 January 1983<br>* abstract; figures 1,2,4 * | 1,3,5,6,<br>9,10 | |
| A | WO 92 15958 A (AUTOGRAPHIX INC) 17 September 1992<br>* abstract; figures 15,16 *<br>* page 16, line 14 - line 36 *<br>* page 21, line 8 - line 31 * | 1,2,5-10 | |
| A | EP 0 489 338 A (SIEMENS AG) 10 June 1992<br>* abstract; figures 1-3 * | 1,9 | TECHNICAL FIELDS SEARCHED (Int.Cl.6)<br><br>H04N |
| A | EP 0 671 700 A (LEXMARK INT INC) 13 September 1995<br>* abstract; figures 1-5 *<br>----- | 1,9 | |

The present search report has been drawn up for all claims

| Place of search | Date of completion of the search | Examiner |
|---|---|---|
| BERLIN | 22 May 1997 | Kassow, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)